# EUROPÄISCHE PATENTSCHRIFT

(11) **EP 1 443 714 B1**
(45) Veröffentlichungstag und Bekanntmachung des Hinweises auf die Patenterteilung: **25.07.2007**
(21) Anmeldenummer: 03023056.9
(22) Anmeldetag: 14.10.2003
(51) Int. Cl.: H04L 12/56

(54) **Bluetooth-Administrator**
Bluetooth administrator
Gestionnaire Bluetooth

(30) Priorität: 01.02.2003 DE 10304040
(43) Veröffentlichungstag der Anmeldung: 04.08.2004
(73) Patentinhaber: Deutsche Telekom AG, 53113 Bonn (DE)
(72) Erfinder: Bindel, Frank, 54123 Königswinter (DE); Brackmann, Ludwig, Dipl.Ing., 53225 Bonn (DE)
(74) Vertreter: Braun-Dullaeus, Karl-Ulrich

(56) Entgegenhaltungen:
- WO-A-01/78325
- US-A1- 2002 154 607
- "SPECIFICATION OF THE BLUETOOTH SYSTEM, PROFILES, VERSION 1.0 B, SERVICE DISCOVERY APPLICATION PROFILE" BLUETOOTH SPECIFICATION, 1. Dezember 1999 (1999-12-01), XP002176976 Gefunden im Internet: <URL:www.bluetooth.com> [gefunden am 2001-09-07]
- FRODIGH M ET AL: "WIRELESS AD HOC NETWORKING-THE ART OF NETWORKING WITHOUT A NETWORK" ON - ERICSSON REVIEW, ERICSSON. STOCKHOLM, SE, Bd. 77, Nr. 4, 2000, Seiten 248-263, XP000969933 ISSN: 0014-0171

## Beschreibung

Die vorliegende Erfindung betrifft ein Verfahren zur Herstellung eines Netzwerkes von untereinander unmittelbar in Funkverbindung stehenden Endgeräten, wobei die Funkverbindung eine Nahfunkverbindung ist, wobei die Endgeräte anhand einer jeweils ausgestrahlten Kennung von einem anderen Endgerät entdeckt werden, sobald sich die beiden Endgeräte innerhalb eines gemeinsamen Sende- und Empfangsradius begegnen, wobei ein entdecktes Endgerät in eine Verbindungsliste eingetragen wird, wobei ein Endgerät als Administrator deklariert wird, der eine Meta-Verbindungsliste mit den zwischen den im Sende- und Empfangsradius befindlichen Endgeräten möglichen Verbindungen enthält, wobei zumindest ein Teil der Meta-Verbindungsliste vom Administrator auf ein aufzunehmendes Endgerät übertragen wird und wobei die innerhalb der übertragenen Meta-Verbindungsliste aufgelisteten Verbindungen freischaltbar sind. Zudem betrifft die Erfindung ein System zur Umsetzung des Verfahrens.

Die US 2002/0154607 A1 zeigt ein solches Verfahren zum Aufbau eines Netzwerks zwischen unmittelbar in Funkverbindung stehenden Endgeräten, wobei ein Host als Administrator zur Verfügung steht, der eine derartige Meta-Verbindungsliste aller im Netzwerk verfügbaren Endgeräte erstellt.

Generell sind eine Vielzahl von Geräten, insbesondere Computer, Mobiltelephone oder PDA's ("Persönlicher Digitaler Assistent"), bekannt, die über eine derartige Nahfunk- Schnittstelle, insbesondere nach dem Blootooth-Standard (siehe z.B. BLUETOOTH SPECIFICATION Version 1.0 B vom 1. Dezember 1999) verfügen und vermittels direkter Funkverbindung mit einem anderen Geräten kommunizieren können. Die Verbindung wird hergestellt, sobald ein erstes Endgerät in den Sende- und Empfangsbereich des zweiten gelangt. Dann wird das jeweilige Vorhandensein wechselseitig registriert und jeder der beiden Nutzer kann an seinem Gerät den Zugriff durch das andere Gerät mit einer aktiven Freigabe legitimieren. Dabei sind für diesen vereinfacht dargestellte Vorgang eine Reihe von manuell einzugebenden Einzelschritten nötig, die für jede einzelne Verbindung durchlaufen werden müssen. Gerade der Aufbau komplexerer Netze mit einer größeren Teilnehmerzahl ist mit erheblichem Aufwand verbunden, der die spontane Herstellung eines Netzes, beispielsweise in der Art einer Konferenzschaltung, beschwerlich und wegen des großen Zeitbedarfs unpraktikabel macht.

Da ein gewisses Maß an Datensicherheit erforderlich ist, kann dieses Problem nicht einfach dadurch gelöst werden, dass sich die Netze automatisch bilden, sobald sich Endgeräte in ihrem Sende- und Empfangsbereich nahe kommen. In diesem Fall könnten alle Nutzer, die unberechtigt in das Netz eingebunden sind, sich sämtlicher ausgetauschten Daten bedienen, auch wenn ihnen Informationen unzugänglich sein sollten. Schließlich ist Bluetooth ist mit seinen omnidirektionalen Fähigkeiten nur begrenzt fähig, den richtigen" Empfänger ausfindig zu machen. Um in dem genannten Betriebsmodus der offenen Verbindung eine ausreichende Datensicherheit gewährleisten zu können, bedürfte es einer besonderen Kodierung der ausgetauschten Daten, was wiederum mit erheblichem Aufwand verbunden wäre.

Aufgabe der Erfindung ist es nunmehr, ein Verfahren zur Errichtung derartiger Netzverbindungen zu schaffen, das sich einfach und mit kostengünstigen Mitteln umsetzen lässt und das bei Gewährleistung der Datensicherheit zur Erhöhung des Bedienungskomforts und damit zur Steigerung der Akzeptanz beiträgt. Außerdem soll ein System zur Umsetzung des Verfahrens geschaffen werden.

Diese Aufgaben werden durch das Verfahren mit den kennzeichnenden Merkmalen des Anspruch 1 und das System nach Anspruch 9 gelöst.

Der Kerngedanke der Erfindung liegt darin, die Herstellung der Verbindungen von zentraler Stelle von einem Administrator aus zu organisieren. Mit der Erfindung erübrigt es sich, dass jedes der im Netz befindlichen Endgeräte jeweils mit jedem anderen Endgerät eine separate Verbindung herstellt, die mit einer Vielzahl vom Nutzer einzugebender Schritte initialisiert und für die Datenübertragung aktiviert werden muss. So mussten bislang in einem Netz mit n Endgeräten n·(n-1) Einwilligungen einzeln erteilt werden, um die n·(n-1)/2 Verbindungen herzustellen.

Im Gegensatz dazu werden nun erfindungsgemäß alle zwischen den beteiligten Endgeräten möglichen Verbindungen zunächst in einer gemeinsamen Rechenoperation, die der Administrator bewerkstelligt, ermittelt und in einer Meta-Verbindungsliste zusammengestellt. Nachfolgend wird diese Meta-Verbindungsliste oder zumindest der für das jeweilige Endgerät entscheidende Teil der Meta-Verbindungsliste auf das Endgerät übertragen. Dabei sind in solchen Verbindungslisten die Kennungen der Geräte aufgelistet, die ihr Einverständnis für eine gegenseitige Kommunikation erteilt haben und zu denen eine aktivierte Verbindung automatisch hergestellt werden kann. Als Endgeräte kommen alle Geräte in Betracht, die über eine Schnittstelle für den Nahfunk verfügen. Dazu zählen insbesondere PC's und Laptop's mit Peripherie, PDA's, Mobiltelephone und auch sogenannte Headsets, in denen Kopfhörer und Mikrophon vereint ist.

Die Erfindung kann durch ein Computerprogramm (Initialisierungsmodul) realisiert werden, von dem ein Teil auf dem Administrator und ein Teil auf jedem Endgerät läuft. Das Programm kann bewirken, dass die von einem Endgerät entdeckten Adressen anderer Endgeräte an den Administrator geschickt werden, der zwischenzeitlich selber die Adressen empfangen haben kann. Nun findet ein Adressenabgleich statt, wobei es vorteilhaft ist, einige der Adressen schon in dieser Phase mit Sperrvermerken, betreffend nicht legitimierte Verbindungen, zu versehen. Der Administrator sendet die generierte Verbindungsliste an jedes entsprechende Endgerät zurück. Damit sind die Endgeräte für die Freischaltung der Verbindungen bereit. Diese Prozedur der Initialisierung geschieht automatisch ohne Eingriff durch den Nutzer.

Damit der Administrator die Organisation verantwortlich übernehmen kann, ist es notwendig, dass die Endgeräte, die an dem automatisierten Verfahren teilnehmen wollen, ihm eine Art beschränkte oder unbeschränkte Vollmacht zur Einwilligung erteilen. Damit kann der Administrator für die einzelnen Endgeräte handeln und die legitimierten Verbindungen aktivieren. Dabei bedeutet "aktivieren", dass die Verbindungen zum endgültigen Freischalten vorbereitet sind. Alle möglichen Verbindungen werden in die Meta-Verbindungsliste eingetragen. Hat ein Endgerät lediglich eine beschränkte Vollmacht erteilt, beispielsweise nur für die Aktivierung von Verbindungen zu Endgeräten mit verwandter Kennung, so werden diese Verbindungen, wie oben dargelegt, mit einem entsprechenden Vermerk versehen und können nach dem Download freigeschaltet werden. Diese Ausführungsform bietet den höchsten Komfort für den Kunden, der sich nunmehr kaum noch um die Organisation des "Pikonetzes" kümmern braucht. Er hat nunmehr die Möglichkeit, mit seinem Gerät in eine Konferenz zu gehen, während sämtliche Verbindungen mit positiven Aktivierungsvermerk automatisch freigeschaltet werden, wobei bestimmte Verbindungen ein Sperrvermerk tragen können.

In Praxis würde die Erstellung eines Pikonetzes beispielsweise zwischen fünf in einem Konferenzraum befindlichen Laptops, die über Bluetooth Schnittstellen unmittelbar miteinander kommunizieren können, wie folgt ablaufen: Alle Geräte befinden sich in einem gemeinsamen Sende- und Empfangskreis und senden neben ihrer Kennung eine Vollmacht an einen Administrator. Dabei kann die Administratorfunktion von einem der in das Netz eingebundenen Endgeräte oder einem separaten Gerät (z.B. Laptop oder PDA) übernommen werden. Der Administrator erkennt alle Endgeräte an deren Kennung, die beispielsweise in Form der bekannten individuellen Adresse ausgestrahlt wird. Der Administrator erstellt dann eine Liste aller zwischen den Adressen legitimierten Verbindungen, deren Anzahl sich hier auf zehn beläuft, und schickt die Liste oder nur den jeweils relevanten Teil der Liste an die jeweiligen Endgeräte, wobei hinter jeder der gelisteten Verbindungen ein Vermerk zur Aktivierung ("ja"/"nein") stehen kann. Das so initialisierte Endgerät nimmt die Verbindungen auf und schaltet sie frei. Kommt ein sechstes Endgerät in die Konferenz, meldet es sich beim Administrator an und gibt ihm die Vollmacht zur Erstellung der Verbindungen. Nicht nur das sechste, sondern auch die übrigen Endgeräte bekommen dann prompt eine aktualisierte Liste von Verbindungen mit Aktivierungsvermerk, die die Geräte durch Freischalten der Verbindungen umsetzen können.

Der Vorteil der Erfindung liegt darin, dass die Prozedur der Initialisierung sich für den Nutzer durch die Automatisierung erheblich vereinfacht hat. So braucht sich der Nutzer mit seinem Endgerät nur noch in die Nähe anderer Geräte zu begeben und prompt werden die von ihm legitimierten Verbindungen hergestellt. Die Legitimationen können in jedem Endgerät im Voraus derart definiert sein, dass eine Gruppe von Geräteadressen, die ständig wiederkehren oder die beispielsweise einer Firma oder einer Personengruppe zuzuordnen sind, mit einem positiven Aktivierungsvermerk versehen sind.

Das eigentliche Freischalten kann auf zweierlei Art und Weise geschehen. Zum einen ist es möglich das Freischalten automatisch zu bewerkstelligen, sobald das auf dem Endgerät realisierte Programm einen positiven Aktivierungsvermerk in der übertragenen Verbindungsliste findet. In einer anderen Ausführungsform kann das Freischalten mit einem selektivem Befehl des Nutzers, insbesondere durch einen Tastendruck oder einen Sprachbefehl, geschehen. Bei dieser selektiven Auswahl ist es aus Gründen der einfacheren Handhabbarkeit von Vorteil, wenn alle möglichen Verbindungen auf einem Bildschirm der Endgerätes angezeigt werden. Im Rahmen dieser Darstellung ist es vorteilhaft, wenn darin ein Hinweis auf die freigeschalteten und/oder die blockierten Verbindungen gegeben wird.

In einem besonders zu bevorzugenden Fall, könnten die im Einzugsbereich befindlichen Endgeräte symbolisch auf dem Bildschirm angezeigt werden, wobei die Anordnung der Symbole auf dem Bildschirm der tatsächlichen Anordnung der Endgeräte entspricht. Der Nutzer erkennt darin sofort die ihm gegenübersitzenden Beteiligten. Nachdem jeder Teilnehmer im Netz registriert ist, könnte der Name jedes Teilnehmers auf jedem Display angezeigt werden. Das kann dann in Form einer Grafik geschehen, wobei die Teilnehmer, wie gesagt, geographisch angeordnet sind. So erspart sich der Versender das Suchen der Namen aus der Liste. Bei größeren Gruppen bietet das System-Tool vorteilhafterweise die Möglichkeit, eine Selektion durch ein Filter vorzunehmen, das einzelne Endgeräte nach Firmen- oder Abteilungszugehörigkeit herausfiltert. Damit kann der Sender bestimmen, wer im Bluetooth-Piconetz seine Informationen oder Daten erhalten soll.

Wie die automatische Initialisierung der in den Sende- und Empfangsradius eintretenden Geräte geschieht, so ist es ebenso vorteilhaft, die wenn freigegebenen Verbindungen dann wieder automatisch gelöscht werden, sobald die Endgeräte den gemeinsamen Sende- und Empfangsradius verlassen. Der Nutzer braucht sich somit um die Langzeitwirkung seines möglicherweise nur kurzen Zusammentreffens keine weiteren Gedanken zu machen.

## Patentansprüche

1. Verfahren zur Herstellung eines Netzwerkes von untereinander unmittelbar in Funkverbindung stehenden Endgeräten, wobei die Funkverbindung eine Nahfunkverbindung ist, wobei die Endgeräte anhand einer jeweils ausgestrahlten Kennung von einem anderen Endgerät entdeckt werden, sobald sich die beiden Endgeräte innerhalb eines gemeinsamen Sende- und Empfangsradius begegnen, wobei ein entdecktes Endgerät in eine Verbindungsliste eingetragen wird, wobei ein Endgerät als Administrator deklariert wird, der eine Meta-Verbindungsliste mit den zwischen den im Sende- und Empfangsradius befindlichen Endgeräten möglichen Verbindungen enthält, wobei zumindest ein Teil der Meta-Verbindungsliste vom Administrator auf ein aufzunehmendes Endgerät übertragen wird und wobei die innerhalb der übertragenen Meta-Verbindungsliste aufgelisteten Verbindungen freischaltbar sind
**dadurch gekennzeichnet, dass**
eine in der Verbindungsliste stehende Verbindung aktiviert wird, sobald die daran beteiligten Endgeräte ihre Einwilligung erteilt haben, wobei dem Administrator von einem in das Netz aufzunehmenden Endgerät eine beschränkte oder unbeschränkte Vollmacht zur Erteilung der Einwilligung gegeben wird.

2. Verfahren nach Anspruch 1,
**dadurch gekennzeichnet, dass** der Administrator den vom Endgerät freizuschaltenden Verbindungen einen positiven Aktivierungsvermerk in der Meta-Verbindungsliste zuweist.

3. Verfahren nach Anspruch 2,
**dadurch gekennzeichnet, dass** das Freischalten automatisch geschieht, wenn in der übertragenen Verbindungsliste ein positiver Aktivierungsvermerk eingetragen ist.

4. Verfahren nach Anspruch 1,
**dadurch gekennzeichnet, dass** das Freischalten mit selektivem Befehl, insbesondere durch Tastendruck geschieht.

5. Verfahren nach einem der vorherigen Ansprüche,
**dadurch gekennzeichnet, dass** die möglichen Verbindungen auf einem Bildschirm der Endgerätes symbolisch angezeigt werden, wobei ein Hinweis auf die freigeschalteten und/oder blockierten Verbindungen gegeben wird.

6. Verfahren nach Anspruch 5,
**dadurch gekennzeichnet, dass** die Anordnung der symbolischen Anzeigen der tatsächlichen Anordnung der Endgeräte entspricht.

7. Verfahren nach einem der vorherigen Ansprüche,
**dadurch gekennzeichnet, dass** die Administratorfunktion von einem Programm realisiert wird, das auf einem Endgerät läuft.

8. Verfahren nach einem der vorherigen Ansprüche,
**dadurch gekennzeichnet, dass** die freigegebenen Verbindungen gelöscht werden, sobald die Endgeräte den gemeinsamen Sende- und Empfangsradius verlassen.

9. Administrator zur Umsetzung eines Verfahrens nach einem der vorherigen Ansprüche, aufweisend eine Schnittstelle, vermittels derer eine Nahfunkverbindung zu einem im Sende- und Empfangsbereich vorhandenen Endgerät herstellbar ist, und
ein Initialisierungsmodul, das derart ausgestaltet ist, dass es die Kennungen der im Sende- und Empfangsbereich vorhandenen Endgeräte registriert, diese im Rahmen einer Meta-Verbindungsliste zu einem Netzwerk verbindet und zumindest einen Teil der Meta-Verbindungsliste an jedes Endgerät sendet.

10. Administrator nach Anspruch 9,
**dadurch gekennzeichnet, dass** das Initialisierungsmodul von einem Computerprogramm realisiert ist.

11. Administrator nach Anspruch 9 oder 10,
**dadurch gekennzeichnet, dass** die Nahfunkverbindung eine Bluetooth Verbindung ist.

## Claims

1. Method for establishing a network of terminals that are in direct radio connection with one another, wherein the radio connection is a short-range radio connection, wherein the terminal are discovered by another terminal, by means of an identifier transmitted in each case, as soon as the two devices encounter one another within a shared transmission and reception radius, wherein a discovered terminal is entered in a connection list, wherein one terminal is declared as an administrator that contains a meta-connection list of the possible connections between the terminals located in the transmission and reception radius, wherein at least a portion of the meta-connection list is transmitted by the administrator to a terminal being incorporated [into the network], and wherein the connections listed in the transmitted meta-connection list can be enabled, **characterized in that** a connection listed in the connection list is activated as soon as the terminals participating therein have granted their permission, wherein a terminal to be incorporated into the network gives the administrator a limited or unlimited authorization to grant permission.

2. Method according to claim 1, **characterized in that** the administrator assigns a positive activation marker in the meta-connection list to the connections to be enabled by the terminal.

3. Method according to claim 2, **characterized in that** the enabling takes place automatically when a positive activation marker is present in the transmitted connection list.

4. Method according to claim 1, **characterized in that** the enabling takes place with a selective command, in particular by the press of a button.

5. Method according to any one of the preceding claims, **characterized in that** the possible connections are displayed symbolically on a screen of the terminal, wherein an indication of the enabled and/or blocked connections is given.

6. Method according to claim 5, **characterized in that** the arrangement of the symbolic displays corresponds to the actual arrangement of the terminals.

7. Method according to any one of the preceding claims, **characterized in that** the administrator function is implemented by a program that runs on a terminal.

8. Method according to any one of the preceding claims, **characterized in that** the enabled connections are deleted as soon as the terminals leave the shared transmission and reception radius.

9. Administrator for implementing a method according to any one of the preceding claims, having an interface by means of which a short-range radio connection can be established to a terminal present in the transmission and reception radius, and having an initialization module designed such that it records the identifiers of the terminals present in the transmission and reception radius, connects said terminals together into a network within the framework of a meta-connection list, and transmits at least a portion of the meta-connection list to each terminal.

10. Administrator according to claim 9, **characterized in that** the initialization module is implemented by a computer program.

11. Administrator according to claim 9 or 10, **characterized in that** the short-range radio connection is a Bluetooth connection.

## Revendications

1. Procédé destiné à l'établissement d'un réseau de terminaux communiquant directement entre eux par liaison radio, la liaison radio étant une liaison radio de proximité, les terminaux étant détectés par un autre terminal au moyen d'un identifiant respectivement émis dès que les deux terminaux se rencontrent à l'intérieur d'un rayon d'émission et de réception commun, un terminal détecté étant enregistré dans une liste de liaisons, un terminal étant déclaré en tant qu'administrateur, qui comprend une métaliste de liaisons possibles entre les terminaux se trouvant dans le rayon d'émission et de réception, au moins une partie de la métaliste de liaisons étant transmise par l'administrateur à un terminal à intégrer et les liaisons listées dans la métaliste de liaisons transmise pouvant être activées,
**caractérisé en ce qu'**une liaison comprise dans la liste de liaisons est activée dès que les terminaux concernés aient donné leur consentement, un pouvoir limité ou illimité en vue de l'octroi du consentement étant donné à l'administrateur par un terminal à intégrer au réseau.

2. Procédé selon la revendication 1,
**caractérisé en ce que** l'administrateur attribue aux liaisons à activer par le terminal une annotation d'activation positive dans la métaliste de liaisons.

3. Procédé selon la revendication 2,
**caractérisé en ce que** l'activation se produit automatiquement lorsqu'une annotation d'activation positive est enregistrée dans la métaliste de liaisons transmise.

4. Procédé selon la revendication 1,
**caractérisé en ce que** l'activation s'effectue par commande sélective, en particulier par pression sur une touche.

5. Procédé selon l'une des revendications précédentes,
**caractérisé en ce que** les liaisons possibles s'affichent sous forme de symboles sur un écran du terminal, une indication étant donnée sur les liaisons activées et/ou les liaisons bloquées.

6. Procédé selon la revendication 5,
**caractérisé en ce que** la disposition des affichages sous forme de symboles correspond à la disposition réelle des terminaux.

7. Procédé selon l'une des revendications précédentes,
**caractérisé en ce que** la fonction d'administrateur est réalisée par un programme qui tourne sur un terminal.

8. Procédé selon l'une des revendications précédentes,
**caractérisé en ce que** les liaisons validées sont supprimées dès que les terminaux quittent le rayon d'émission et de réception commun.

9. Administrateur destiné à la mise en oeuvre d'un procédé selon l'une des revendications précédentes, comportant une interface, au moyen de laquelle une liaison radio de proximité peut être établie vers un terminal présent dans la zone de réception et d'émission, et un module d'initialisation, conçu de telle manière qu'il enregistre les identifiants des terminaux présents dans la zone de réception et d'émission, relie les terminaux dans le cadre d'une métaliste de liaisons pour former un réseau et envoie au moins une partie de la métaliste de liaisons à chaque terminal.

10. Administrateur selon la revendication 9,
**caractérisé en ce que** le module d'initialisation est réalisé par un programme d'ordinateur.

11. Administrateur selon la revendication 9 ou 10,
**caractérisé en ce que** la liaison radio de proximité est une liaison Bluetooth.
